Europäisches Patentamt

European Patent Office

Office européen des brevets

(19)

(11) EP 0 456 629 B1

(12) **FASCICULE DE BREVET EUROPEEN**

(45) Date de publication et mention
de la délivrance du brevet:
**13.03.1996 Bulletin 1996/11**

(51) Int Cl.6: **G01N 9/24**, G01N 23/08

(21) Numéro de dépôt: **91870075.8**

(22) Date de dépôt: **08.05.1991**

(54) **Installation de mesure continue de la densité et du poids total de matériaux chargés dans un puits d'une drague autoporteuse**

Einrichtung zur kontinuierlichen Messung der Dichte und des Gesamtgewichts des Inhaltes des Laderaums eines Laderaumbaggers

Device for continuous measurement of the density and total weight of material in the hold of a hopper-dredger

(84) Etats contractants désignés:
**DE DK ES FR GB IT NL**

(30) Priorité: **11.05.1990 BE 9000499**

(43) Date de publication de la demande:
**13.11.1991 Bulletin 1991/46**

(73) Titulaire: **N.V. BAGGERWERKEN DECLOEDT & ZOON**
**B-8400 Oostende (BE)**

(72) Inventeurs:
• **Duthoo, Jan**
**B-8370 Blankenberge (BE)**
• **Bramah, John Clive**
**Lindrick Dale, Worksop (GB)**
• **Marks, Alan Jack**
**Taunton, Somerset TA1 1SY (GB)**

• **Parker, William Reginald**
**Blagdon Hill, Taunton TA3 7SH (GB)**
• **Paske, Rex Edgard Aubrey**
**Charney Basset, Oxfordshire OX12 0EX (GB)**
• **Whitlock, Lyn Susan**
**Taunton, Somerset TA1 1 SY (GB)**

(74) Mandataire: **Plucker, Guy et al**
**OFFICE KIRKPATRICK**
**Avenue Wolfers, 32**
**B-1310 La Hulpe (BE)**

(56) Documents cités:
EP-A- 0 013 588          BE-A- 896 481
DE-A- 3 107 091          FR-A- 2 455 275

• INTERNATIONAL JOURNAL OF RADIATION APPLICATIONS AND INSTRUMENTATION PART A vol.40, no. 4, 1989, Oxford, GB, pages 340-342, A.A. FAHAD: "A computer-controlled dual-gamma scanner for measurement of soil water content and bulk density"
• PATENT ABSTRACTS OF JAPAN vol. 4, no. 115 (P-023)16 Août 1980 & JP-A-55 71 964

# Description

La présente invention concerne une installation permettant de mesurer continuellement la densité et le poids total de matériaux chargés au cours d'un cycle de dragage, dans le puits d'une drague autoporteuse.

On sait que les sédiments marins et fluviaux présentent la plupart du temps une granulométrie très variable au sein d'un site donné. Sur les fonds où ils reposent, ils sont déposés selon un gradient de densité décroissant de bas en haut, les particules les plus lourdes sédimentant naturellement plus bas que les particules légères.

Lorsqu'un mélange eau-sédiments est dragué, par exemple par succion à travers une élinde, et chargé dans un puits d'une drague autoporteuse ou dans une marie-salope, un phénomène de sédimentation se produit d'une manière analogue : les matériaux en suspension dans l'eau se déposent progressivement en se répartissant dans le puits selon un gradient de densité.

Au début du dragage, pendant une phase dite de chargement, le puits est rempli jusqu'au niveau d'un trop-plein situé dans sa partie supérieure. De manière à embarquer dans un bateau une charge totale présentant une teneur en sédiments aussi élevée que possible, on n'interrompt pas le cycle de dragage dès que le niveau du trop-plein est atteint. Il se produit dès lors nécessairement un débordement, par ce trop-plein, de l'excès du mélange eau-sédiments dragué. Les particules les plus lourdes se déposant progressivement vers le fond du puits, le poids total chargé dans le bateau continue à augmenter au cours de la phase de débordement, la partie du mélange eau-sédiments qui déborde par le trop-plein contenant relativement peu de matériaux en suspension. Bien entendu, l'augmentation du poids total de matériaux chargés dans le bateau par unité de temps décroît sensiblement au cours du cycle de dragage, jusqu'à devenir pratiquement nulle.

Lorsque le dragage est terminé, le puits du bateau contient donc un volume connu de matériaux de dragage répartis suivant un gradient de densité, le long de la hauteur du puits.

Pour chaque cycle de dragage effectué sur un site donné, le paiement accordé à la société qui a réalisé l'opération est fonction de la charge totale embarquée dans le puits au cours de ce cycle.

Un procédé fréquemment utilisé pour évaluer cette charge consiste à placer, dans un puits vide dont le volume est connu, et à différentes hauteurs le long d'un axe vertical, un nombre déterminé de récipients servant à collecter des échantillons de matériaux dragués. Après remplissage du puits et donc des récipients, les échantillons sont prélevés et pesés ou analysés en vue d'en déterminer la densité. La densité moyenne des matériaux chargés dans le puits est déduite des résultats de ces analyses, ce qui permet de calculer leur poids total.

On peut, par exemple, utiliser trois cylindres creux munis d'un couvercle à chacune de leurs extrémités. Les couvercles demeurent ouverts pendant toute la durée du dragage et sont refermés à la fin de celui-ci, après quoi les mesures de densité sont effectuées sur les échantillons ainsi isolés.

Cette technique a le désavantage d'être très lente. De plus, les échantillons ne peuvent en pratique être prélevés qu'une seule fois par cycle de dragage. En effet, il n'est pas possible d'effectuer une nouvelle mesure en replaçant les récipients dans le puits, une fois les mesures effectuées.

Cette technique, déjà ancienne, ne donne, en outre, qu'une approximation assez grossière du poids total de matériaux réellement chargé dans le puits, puisque le nombre d'échantillons prélevés est limité et que le calcul de la densité moyenne est fait en admettant l'hypothèse d'une variation parfaitement linéaire du gradient de densité entre les récipients.

La demande de brevet EP-A-0 013 588 décrit un appareil qui permet le calcul continu de la densité moyenne d'un mélange eau-sédiments dans un puits de bateau dragueur. Le dispositif utilisé comporte un diaphragme disposé près du fond du puits. On mesure la pression hydrostatique exercée sur une face du diaphragme par le mélange eau-sédiments contenu dans le puits en la comparant avec celle exercée sur l'autre face du même diaphragme par un fluide de densité connue contenu dans une colonne de mesure. On fait varier la hauteur du fluide contenu dans la colonne de mesure de manière que les pressions hydrostatiques exercées de part et d'autre du diaphragme se compensent mutuellement. On mesure cette hauteur et on en déduit la valeur moyenne des densités du mélange eau-sédiments aux divers niveaux du puits.

Ce dispositif est susceptible d'induire des erreurs de mesure non négligeables. Le brevet EP-B-0 049 933 tente de remédier à ce problème en proposant un appareil analogue comportant notamment des moyens de mémorisation de plusieurs valeurs de la densité, qui permet de réaliser des mesures avec une plus grande précision et un risque d'erreur moins important.

L'utilisation d'un diaphragme dans un mélange eau-sédiments qui peut contenir des particules solides relativement grandes reste délicate, car ce diaphragme court le risque d'être endommagé. En outre, seule une valeur moyenne des densités peut être obtenue, les dispositifs mentionnés ci-dessus ne fournissant aucune indication quant à la structure du gradient. Comme la section d'un puits de bateau dragueur n'est généralement pas constante sur sa hauteur, le poids total du mélange eau-sédiments contenu dans le puits ne peut donc pas être déduite avec une précision suffisante de la moyenne des densités de ce mélange aux divers niveaux de ce puits.

FR-A-2455275 décrit un procédé et un appareil de mise en oeuvre pour la mesure de densité apparente de carottes de forage doté d'une sonde radioactive à transmission comportant une source radioactive et un détecteur nucléaire placés en vis-à-vis l'un de l'autre des mécanismes de guidage permettant de guider la dite sonde le long d'un tube vertical contenant une colonne de liquide, de pulpe ou une carotte de forage ainsi qu'un mécanisme pour faire déplacer la dite sonde vers le haut et le bas le long de ce tube vertical et des moyens de détermination de la position de la dite sonde.

L'appareil décrit peut être utilisé sur le lieu même de prélèvement de l'échantillon, c'est-à-dire éventuellement sous l'eau.

Dans l'introduction du document BE-A-896481, il est fait mention d'un dispositif connu, pour la mesure de la densité dans un puits de dragage, utilisant des sondes pouvant être montées et descendues dans une gaine de guidage. La caractéristique mobile de ces sondes implique une complexité rendant le dispositif vulnérable aux erreurs techniques et humaines. Partant de cet inconvénient le brevet belge BE-A-896481 décrit un dispositif pour la mesure de la densité dans un puits de dragage. Ce dispositif est basé sur la réflexion par le milieu ambiant de rayons gamma émis par une source radioactive. Des sondes fixes composées d'une source radioactive et d'un détecteur de rayonnements réfléchis, enfermées dans une enveloppe en matière synthétique perméable au rayonnement gamma sont fixées à des hauteurs déterminées dans le puits de dragage. Le nombre et la position relative des sondes sont choisis en fonction de la géométrie de l'espace et de la précision souhaitée de la mesure. Ce document est utilisé pour définir le préambule de la première revendication.

La présente invention a pour but de fournir une installation qui permette une mesure précise et continue rendant compte de l'évolution au cours du temps de la densité moyenne de la charge de matériaux de dragage embarquée, au cours d'un cycle de dragage, dans le puits d'une drague autoporteuse.

Un autre but de l'invention est de fournir une telle installation qui permette également de déterminer avec une bonne précision le poids total de matériaux de dragage chargé dans le puits au cours de ce cycle.

Un autre but de l'invention est de fournir une telle installation comportant un dispositif qui ne risque pas d'être endommagé dans le puits par les sédiments eux-mêmes.

L'invention a également pour but de fournir une telle installation qui permette une surveillance du chargement et une étude de la structure de la charge.

Un autre but de l'invention est de permettre l'obtention d'une productivité optimale au cours d'un cycle de dragage, en déterminant le moment du cycle auquel il n'est plus profitable de continuer les opérations de dragage.

Un autre but de l'invention est de procurer une installation qui permette d'effectuer des mesures rapides, fiables, automatisées et reproductibles, et qui ne produise pas de turbulences susceptibles de perturber la structure du gradient de densité établi dans le puits.

La présente invention a pour objet une installation de mesure continue de la densité et du poids total de matériaux de dragage chargés dans un puits de drague autoporteuse, comportant au moins une sonde radioactive abritée dans une gaine étanche, fixée sensiblement à la verticale dans le puits, ladite sonde comportant une source radio-active et un détecteur nucléaire, le détecteur étant équipé de moyens pour transformer le rayonnement nucléaire en données analysables, ladite installation étant caractérisée en ce qu'elle comporte :

(i) un ou plusieurs dispositifs comportant chacun

- la gaine, celle-ci présentant une section transversale en substance en forme de U, les deux branches en U formant une sorte de couloir vertical semi-ouvert;
- la sonde radioactive, celle-ci étant de type à transmission, la source radioactive émettant en direction du détecteur nucléaire, la source radioactive et le détecteur nucléaire étant placés en vis-à-vis l'un de l'autre, chacun dans une branche du U, le détecteur nucléaire étant équipé de moyens pour transformer le rayonnement nucléaire en photons, puis en impulsions électriques et pour amplifier ensuite ces impulsions;
- des mécanismes de guidage permettant de guider ladite sonde le long d'un trajet vertical dans la gaine;
- des mécanismes pour faire se déplacer ladite sonde vers le haut et vers le bas le long de ce trajet vertical dans la gaine;
- des moyens de détermination de la position de ladite sonde dans la gaine;

(ii) un ensemble de gestion assisté par ordinateur , cet ensemble de gestion étant capable de mesurer et enregistrer le temps, de recevoir et traiter les données collectées par les moyens de détermination de la position de la ou des sonde(s) dans la ou les gaine(s), de recevoir et traiter les données collectées par le ou les détecteur(s) nucléaire(s) sous la forme d'impulsions électriques comptées au cours d'intervalles réguliers préfixés et converties en mesures correspondantes de densité, de calculer à partir de ces mesures le poids total de matériaux de dragage chargés dans le puits, de conserver toutes les données dans une mémoire centrale, d'afficher l'analyse et le résultat de ces mesures à l'aide d'un dispositif d'affichage visuel et/ou d'une imprimante et, en fonction d'un programme présélectionné, et de régler et commander le fonctionnement général de l'installation;
(iii) des moyens de transmission à l'ensemble de gestion des impulsions électriques fournies par le ou les détecteur(s) nucléaire(s) et par les moyens de détermination de la position de la ou des sonde(s) dans la ou les gaine(s).

La gaine est avantageusement fabriquée en acier. La source radioactive est, de préférence une source de rayons gamma. Cette source radioactive peut consister, par exemple, en une perle de céramique de $^{137}$Cs à double encapsulation.

Le détecteur nucléaire est, de préférence, un compteur à scintillation. Dans ce compteur à scintillation, les moyens pour transformer le rayonnement nucléaire en photons, consistent, par exemple, en un cristal de NaI (TI). Les moyens pour transformer les photons en impulsions électriques et les moyens pour amplifier ces impulsions électriques consistent avantageusement respectivement en un photomultiplicateur et en une unité électronique d'alimentation et d'amplification.

Suivant une forme d'exécution particulière de l'installation, la sonde est montée sur un chariot. Les moyens de guidage de la sonde peuvent consister en des rails métalliques disposés verticalement dans la gaine et en des roulettes montées sur le chariot.

Les moyens pour faire se déplacer la sonde le long d'un trajet vertical dans la gaine peuvent, par exemple, comporter un vérin muni d'une tige de piston qui peut se déplacer verticalement dans la gaine. Dans ce cas, ces moyens peuvent, en outre, comporter un mécanisme de transmission apte à transmettre le mouvement de la tige de piston au chariot en multipliant l'amplitude de ce mouvement. Ce mécanisme de transmission peut, par exemple, comporter des poulies montées sur un axe solidaire de l'extrémité de la tige de piston, des poulies fixes solidaires de la gaine et un câble métallique arrimé au chariot et passant sur les dites poulies. Suivant une forme d'exécution particulière, le mécanisme de transmission est tel que tout déplacement de la tige de piston entraîne un déplacement en sens inverse de la sonde.

Les moyens de détermination de la position de la sonde dans la gaine comportent, de préférence, un codeur de position angulaire muni d'un disque codé optiquement, et d'un dispositif optique et électronique interne, le disque étant couplé mécaniquement à une des poulies fixes sur lequel passe le câble métallique.

Les mécanismes pour faire se déplacer la sonde le long du trajet vertical dans la gaine peuvent comporter un moteur électrique pourvu d'un frein électromécanique, un réducteur de vitesse, un tambour d'enroulement pour câble.

L'installation peut être pourvue de moyens pour régler la vitesse de déplacement de la sonde, ces moyens comportant une commande électronique de fréquence; ces moyens peuvent également comporter un régulateur à quatre quadrants et un générateur tachymétrique monté sur le moteur électrique.

Les moyens de détermination de la position de la sonde dans la gaine comportent de préférence un codeur de position angulaire muni d'un disque codé optiquement et d'un dispositif optique et électronique interne, le disque étant couplé mécaniquement à une partie rotative dont le mouvement est en rapport avec le déplacement de la sonde.

Des interrupteurs de fin de course inférieur et supérieur peuvent être disposés aux extrémités du trajet vertical parcouru par la sonde dans la gaine. Ces interrupteurs sont alors aptes à transmettre des données à l'ensemble de gestion assisté par ordinateur.

Avantageusement, cet ensemble de gestion sera doté d'un programme permettant notamment que le détecteur nucléaire qui effectue des mesures continues les transmette à l'ensemble de gestion lorsque la sonde se déplace de l'interrupteur de fin de course inférieur à l'interrupteur de fin de course supérieur selon un trajet vertical dans la gaine et retourne à sa position de départ sans effectuer de mesures.

L'invention est de préférence exécutée comme suit : dans la partie supérieure de la gaine est prévue une chambre disposée au-dessus du niveau maximum de remplissage du puits. Cette chambre est apte à recevoir le chariot et la sonde et peut également servir au stockage du chariot et de la sonde en dehors des périodes de fonctionnement de l'installation. Dans une installation suivant l'invention, l'interrupteur de fin de course supérieur est de préférence situé au-dessus du niveau de cette chambre.

Cette chambre comporte, de préférence, un bac de calibrage situé dans le prolongement du couloir vertical compris entre les branches de la gaine en U. Ce bac de calibrage est apte à contenir des milieux de densité connue servant au calibrage de la sonde.

L'installation de l'invention comporte, de préférence, un détecteur de fuites. Ce détecteur de fuites étant capable de détecter la présence dans la gaine de matières solides ou liquides qui y entreraient à la suite d'une fuite et de transmettre une information correspondante à l'ensemble de gestion.

Cet ensemble de gestion est capable de commander, en cas de fuite détectée par le détecteur de fuites, l'envoi immédiat de la sonde dans la chambre et l'interruption du fonctionnement de l'installation.

De préférence, l'ensemble de gestion comporte, en outre, une mémoire externe. On peut notamment faire usage d'unités de disques-mémoires et d'enregistreurs sur bande qui permettent d'étudier les données ailleurs que sur le bateau dragueur, par exemple dans des bureaux d'étude.

D'autres particularités et avantages de l'invention ressortiront de la description donnée à titre non limitatif, référence étant faite aux dessins annexés, dans lesquels :

la Fig. 1 est une vue schématique en élévation, avec interruption, de la gaine d'un dispositif faisant partie d'une installation selon l'invention. Cette gaine est montrée verticale, telle qu'elle est disposée dans un puits de bateau dragueur;

la Fig. 2 est une coupe suivant la ligne II-II de la Fig. 1;

les Fig. 3, 4 et 5 sont des vues schématiques simplifiées montrant l'ensemble des éléments du dispositif contenus dans la gaine montrée à la Fig. 1. Ces éléments sont représentés à différents moments d'un cycle de fonctionnement de ce dispositif;

la Fig. 6 est une vue schématique (avec déformations) montrant la disposition d'un câble métallique qui entraîne, dans le dispositif de la Fig. 1, un chariot portant une sonde radioactive à transmission, et d'un câble électrique qui collecte des données à partir de cette sonde et les transmet à l'ensemble de gestion assisté par ordinateur qui commande le fonctionnement général de l'installation;

la Fig. 7 est une vue détaillée en élévation avec interruptions, de l'ensemble des éléments du dispositif contenus dans la gaine, dans la position représentée schématiquement à la Fig. 3;

la Fig. 8 est une coupe suivant la ligne VIII-VIII de la Fig. 7;

la Fig. 9 est une coupe suivant la ligne IX-IX de la Fig. 7;

la Fig. 10 est une coupe suivant la ligne X-X de la Fig. 7;

la Fig. 11 est une coupe suivant la ligne XI-XI de la Fig. 7, sur laquelle certains éléments n'ont pas été représentés, la gaine qui contient l'ensemble des éléments étant par contre montrée sur cette Fig. 11;

la Fig. 12 est une vue en perspective de la sonde radioactive à transmission, montée sur le chariot qui se déplace dans la gaine;

la Fig. 13 est une vue détaillée en élévation avec interruptions, de l'ensemble des éléments contenus dans la gaine, dans la position représentée schématiquement à la Fig. 5;

la Fig. 14 est une vue en perspective montrant l'intérieur de la chambre montée à la partie supérieure de la gaine représentée à la Fig. 1, et

la Fig. 15 est un schéma illustrant le fonctionnement général d'une installation de l'invention.

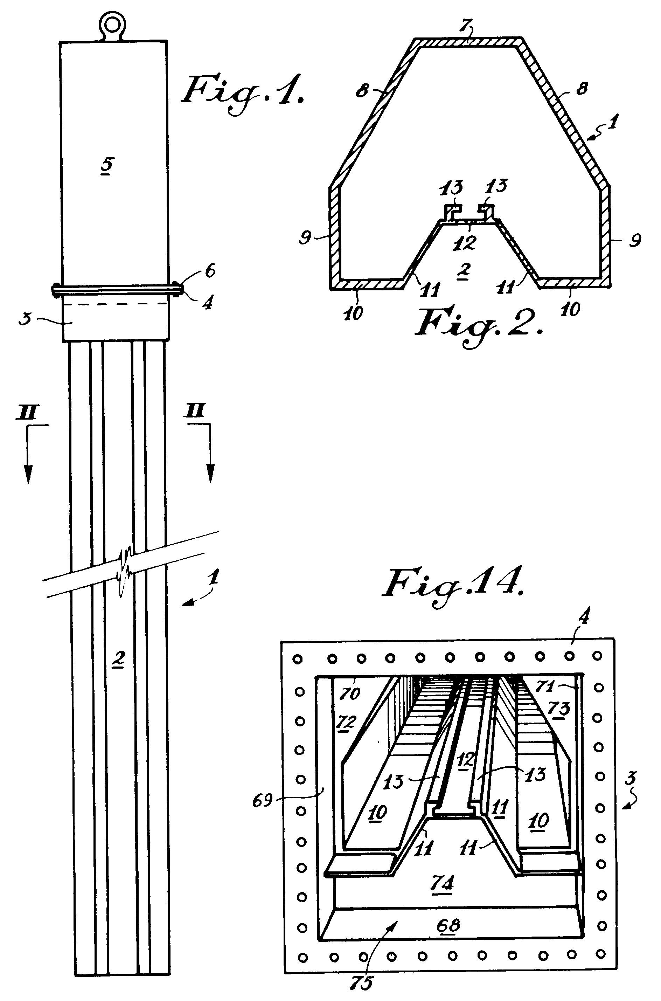

La Fig. 1 représente d'une manière schématique une partie de l'installation de l'invention; cette partie sera désignée sous le nom de "dispositif de mesure de la densité" (en abrégé : dispositif). Plusieurs dispositifs peuvent être installés sur une même drague autoporteuse.

Une gaine 1, en acier et parfaitement étanche, est installée, sensiblement à la verticale, dans un puits d'une drague autoporteuse non représentée sur la Fig. 1. Elle présente une section en substance en forme de U (voir Fig. 2) et s'étend sur la plus grande partie de la hauteur du dispositif, en déterminant entre ses deux branches une sorte de couloir vertical 2.

La gaine 1 est fermée à sa partie inférieure et débouche par sa partie supérieure dans une chambre 3 qui présente une section carrée et qui est bordée, à son extrémité supérieure, d'une bride 4 pourvue de perforations pour le passage de boulons.

Un capuchon 5 de section identique à celle de la chambre 3 et muni semblablement, à sa partie inférieure, d'une bride 6 perforée, est boulonné sur la gaine 1. Un joint d'étanchéité, non représenté, est placé entre les brides 4 et 6.

L'installation de l'invention permet de mesurer de manière continue la densité de matériaux de dragage qui s'accumulent au cours du dragage dans le couloir 2 compris entre les branches de la gaine 1 (voir Fig. 11).

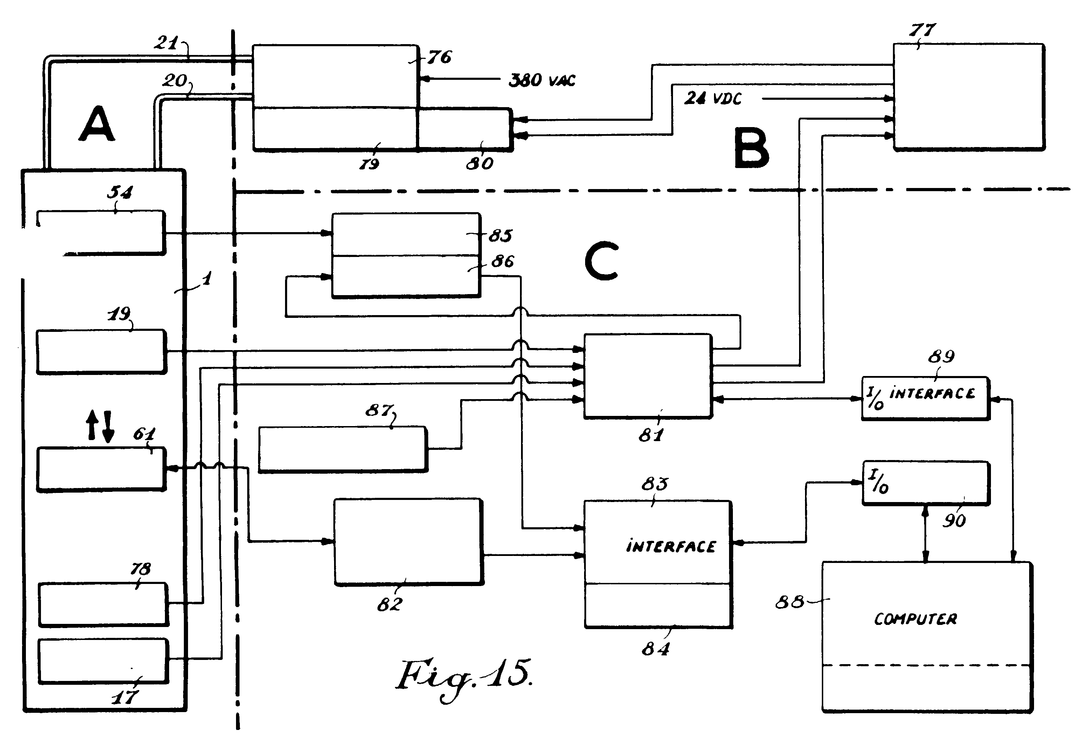

Dans la forme d'exécution représentée aux Fig. 1 et 2, les parois 7 à 10 de la gaine 1 ont 12 mm d'épaisseur, tandis que les parois latérales internes 11 et la paroi 12 qui forment ensemble le couloir 2 n'ont que 6 mm d'épaisseur. Deux profilés en équerre 13, tournés l'un vers l'autre à l'intérieur de la gaine 1, sont solidaires de la paroi 12 et s'étendent longitudinalement suivant la hauteur de la gaine 1 (voir également Fig. 14).

Les Fig. 3 à 5 illustrent d'une manière schématique différentes positions des éléments principaux d'un dispositif de l'installation de l'invention pour la mesure continue de densités. La gaine 1 de ce dispositif n'est pas représentée.

Il faut noter que la hauteur du dispositif (environ 15 m) est de beaucoup plus grande que sa largeur (environ 60 cm), et que dès lors les divers éléments ne sont pas tous représentés à la même échelle.

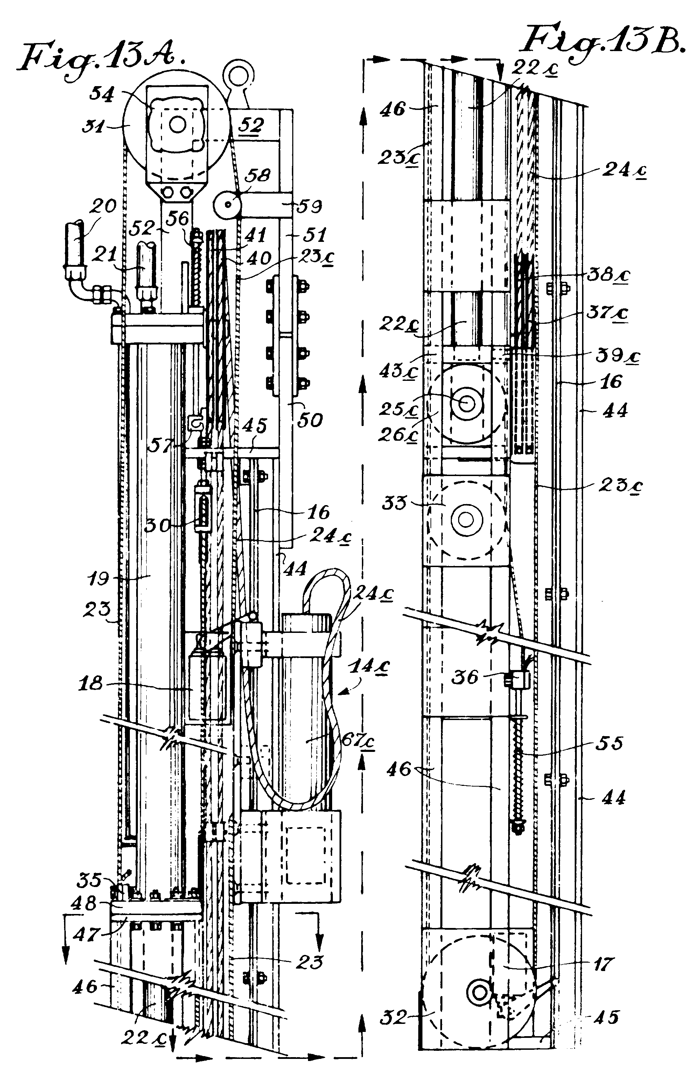

Les mesures de la densité des matériaux qui s'accumulent dans le puits de la drague autoporteuse au cours du dragage sont effectuées dans le couloir vertical 2 grâce à une sonde radioactive à transmission désignée sous la référence générale 14, dont le fonctionnement sera explicité en se référant aux Fig. 11 et 12.

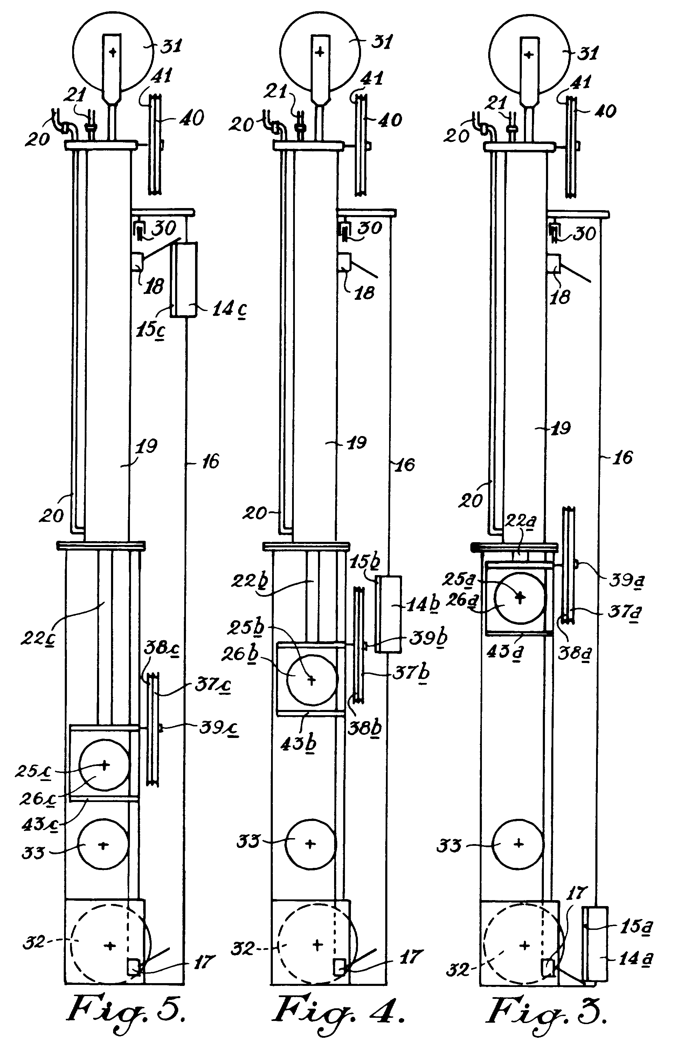

Cette sonde 14 est montée sur un chariot 15 qui, en fonctionnement, se déplace suivant un trajet vertical dans la gaine 1 le long de rails 16 (dont un seul est visible sur les Fig. 3 à 5), entre une position 15a (Fig. 3) où il actionne un interrupteur de fin de course inférieur 17 et une position 15c (Fig. 5) où il actionne un interrupteur de fin de course supérieur 18. Entre les cycles de dragage, c'est-à-dire pendant les périodes où l'installation n'est pas en fonctionnement, le chariot 15 reste, au repos, dans la position 15c.

En fonctionnement, le chariot 15 peut se déplacer de la position 15a à la position 15c et vice versa, entre les interrupteurs de fin de course 17 et 18, en parcourant environ 14 m en 50 à 60 secondes. La Fig. 4 montre une position intermédiaire 15b du chariot 15.

Comme il sera appliqué en détail en se référant à la Fig. 15, la sonde 14 effectue des mesures lors du déplacement du chariot 15 de la position 15a à la position 15c.

Sur les Fig. 3 à 7 et sur la Fig. 13, les éléments mobiles sont désignés par leur chiffre de référence suivi de la lettre a, b ou c suivant la position dans laquelle ils sont représentés.

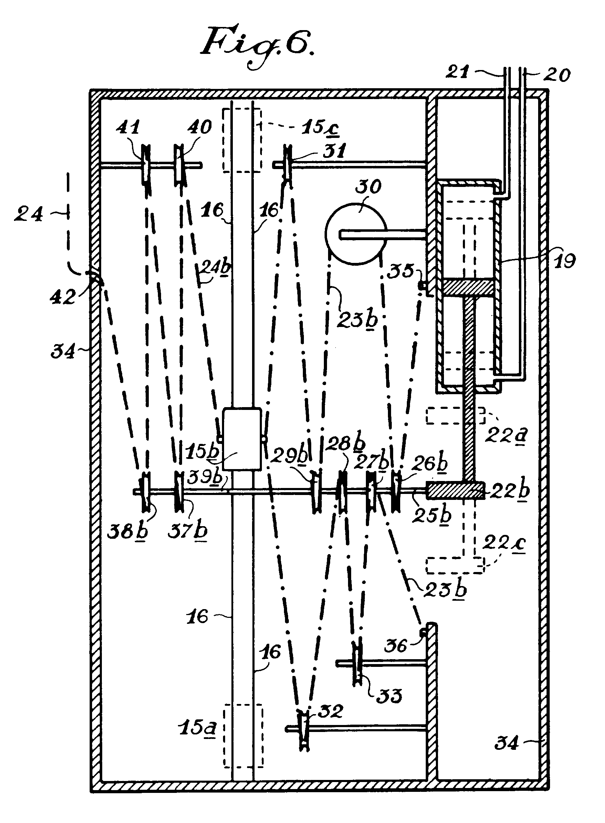

Les déplacements du chariot 15 sont commandés par un vérin hydraulique à double effet 19 par l'intermédiaire d'un câble métallique (non représenté aux Fig. 3 à 5) qui passe par des poulies (voir Fig. 6) et est arrimé au chariot 15. Le vérin 19 est alimenté en fluide hydraulique par deux conduites 20 et 21 qui débouchent respectivement à sa partie inférieure et à sa partie supérieure. La tige de piston 22 se déplace entre une position de rétraction 22a dans le vérin 19 (Fig. 3) et une position 22c dans laquelle elle est sortie au maximum (Fig. 5).

Il est à noter que le chariot 15 se déplace en sens opposé de la tige de piston 22, et à une vitesse quatre fois plus grande.

La sonde 14 portée par le chariot 15 est raccordée à l'ensemble de gestion assisté par ordinateur, qui commande et contrôle le fonctionnement de toute l'installation et est installé à bord de la drague autoporteuse (voir Fig. 15). Ce raccordement est effectué grâce à un câble électrique non représenté aux Fig. 3 à 5.

Le mécanisme de déplacement du chariot 15 sera mieux compris en se référant à la Fig. 6, qui montre schématiquement l'agencement du câble métallique 23 et du câble électrique 24 sur une série de poulies.

Sur la Fig. 6, on a représenté la tige de piston 22 en traits pleins, dans une position 22b analogue à celle de la Fig. 4. On l'a en outre représentée en pointillés dans les positions extrêmes 22a (voir Fig. 3) et 22c (voir Fig. 5). De même, le chariot 15 qui est représenté en traits pleins dans sa position 15b (qui correspond à la position 22b de la tige de piston) est également représenté en pointillés dans ses positions extrêmes 15a et 15c.

La tige de piston 22 entraîne le chariot 15 grâce à un câble métallique 23 (représenté en traits mixtes) qui y est arrimé et qui passe sur une série de poulies.

Un axe horizontal 25 sur lequel sont montées quatre poulies 26, 27, 28 et 29 est solidaire de l'extrémité de la tige de piston 22. Les poulies 30 et 31 (à la partie supérieure du mécanisme) ainsi que les poulies 32 et 33 (à la partie inférieure du mécanisme) sont chacune montées sur un axe horizontal solidaire de la partie fixe 34 du dispositif, représentée schématiquement sur la Fig. 6 par un rectangle. Les deux extrémités du câble métallique 23 sont serrées respectivement dans deux serre-câbles 35 et 36 solidaires de la partie fixe 34 du dispositif.

Du serre-câble 35, le câble métallique 23 passe successivement sur les poulies 26, 30, 29 et 31, le chariot 15 (auquel il est arrimé), et sur les poulies 32, 28, 33 et 27, pour aboutir au serre-câble 36.

Le câble électrique 24 est représenté sur la Fig. 6 en traits interrompus. Il est agencé de manière telle que son extrémité connectée à la sonde 14 puisse suivre les mouvements de celle-ci. A cette fin, le câble électrique 24 passe également sur une série de poulies. Les poulies 37 et 38 sont montées sur un axe horizontal 39 solidaire de l'extrémité de la tige de piston 22. Les poulies 40 et 41 (à la partie supérieure du mécanisme) sont montées sur un axe horizontal solidaire de la partie fixe 34 du dispositif.

Depuis la sonde 14 à laquelle il est connecté et le chariot 15 auquel il est fixé, le câble électrique 24 passe successivement sur les poulies 40, 37, 41 et 38 pour ensuite traverser un manchon 42 par où il sort de la partie fixe 34 du dispositif pour aboutir à l'ensemble de gestion (non représenté) qui commande le fonctionnement général de l'installation (voir Fig. 15).

Il doit être entendu que la Fig. 6 est un schéma dans lequel les dimensions et positions réciproques des éléments représentés ne correspondent pas à la réalité, cette Fig. 6 ayant pour seul but de montrer le principe de fonctionnement de la partie mécanique du dispositif.

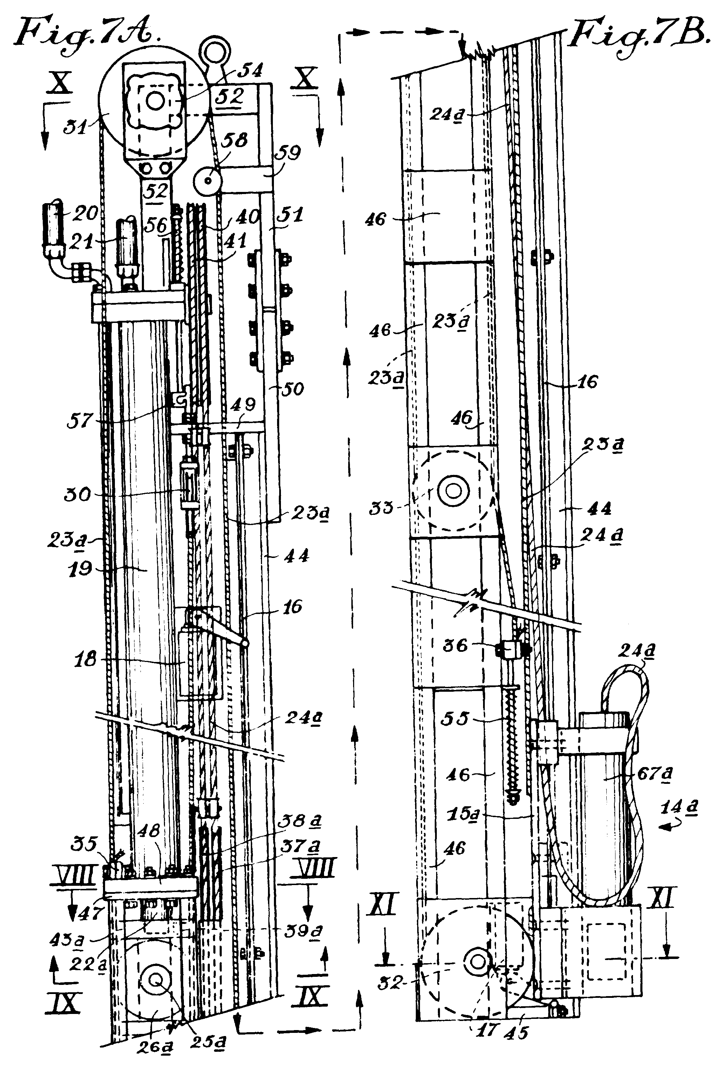

C'est ainsi que les axes 25 et 39 ont été représentés dans le prolongement l'un de l'autre, alors qu'en réalité ces deux axes 25 et 39 sont perpendiculaires l'un à l'autre, tout en étant portés par la même chape 43, comme on peut le voir aux Fig. 7 à 9 et à la Fig. 13.

La Fig. 7 est une vue détaillée en élévation, avec interruptions, de l'ensemble des éléments contenus dans la gaine 1, dans la position représentée schématiquement à la Fig. 3. Les Fig. 7A et 7B montrent chacune une partie de ce dispositif, la partie représentée à la Fig. 7A surmontant la partie représentée à la Fig. 7B.

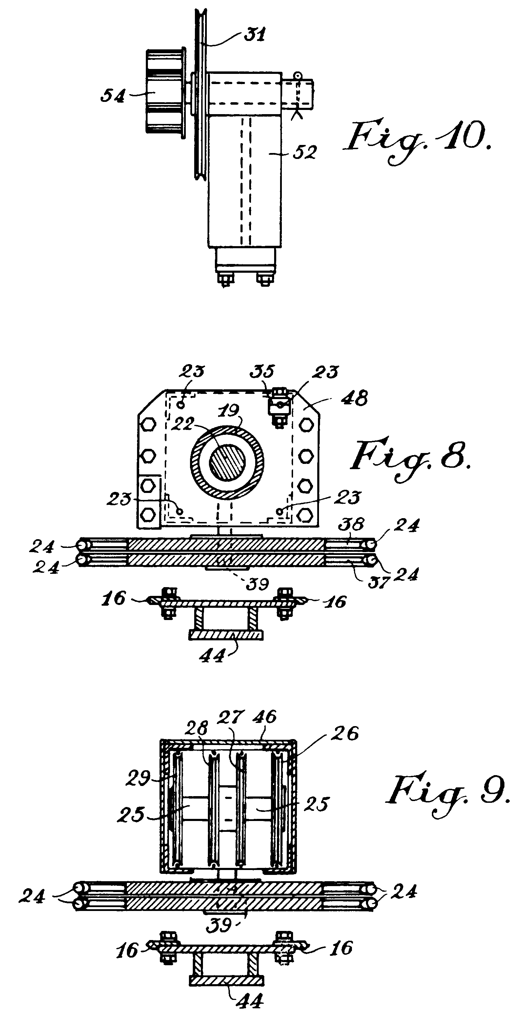

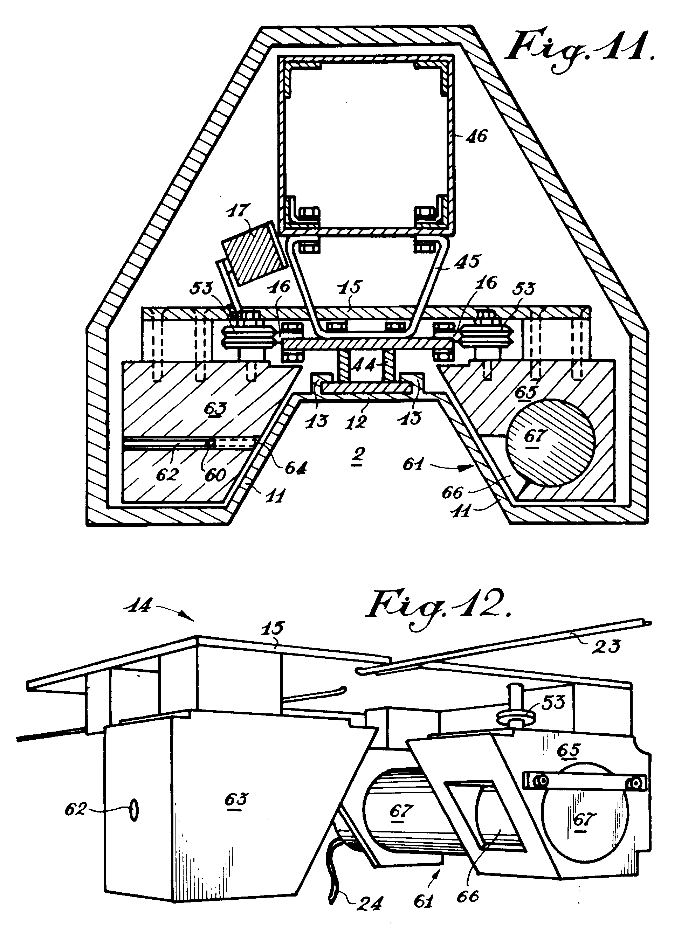

Les Fig. 8, 9 et 10 sont des coupes respectivement selon les lignes VIII-VIII, IX-IX et X-X de cette Fig. 7.

La Fig. 11 est une vue en coupe suivant la ligne XI-XI de la Fig. 7. Certains éléments du mécanisme de transmission n'ont pas été représentés sur cette Fig. 11. Par contre, on a représenté la gaine 1 qui n'était pas montrée à la Fig. 7, de manière à montrer l'agencement des divers éléments du dispositif de l'intérieur de cette gaine 1.

Le profilé métallique 44, qui est constitué de deux plats parallèles de largeurs inégales réunis par deux autres plats disposés perpendiculairement, porte les deux rails 16, boulonnés chacun à un des bords de son plat le plus large. Lors du montage des éléments à l'intérieur de la gaine 1, le profilé métallique 44 est introduit par son plat le moins large, entre les deux profilés en équerre 13 (montrés aux Fig. 2 et 12) qui lui servent de guide. Cette disposition permet le montage aisé du dispositif en atelier, et son démontage rapide pour la maintenance et la réparation. Les éléments fixes du dispositif contenu dans la gaine 1 sont reliés, de manière directe ou indirecte, à ce profilé métallique 44 qui s'étend longitudinalement sur la hauteur de la gaine 1. Il est à noter que la longueur totale du profilé 44 est plus grande que la longueur des profilés en équerre 13 et que la hauteur de la gaine 12 et que le chariot 15 peut, pour des raisons de maintenance, continuer sa course vers le haut le long des rails 16, au-delà de l'interruption de fin de course supérieur 18.

A la partie inférieure du dispositif, une pièce en C 45 est boulonnée d'une part au plat le plus large du profilé 44, et d'autre part à une structure métallique 46 qui sert de support pour les poulies 32 et 33 et de guide pour la chape 43 qui porte les poulies 26, 27, 28, 29, 37 et 38.

Cette structure métallique 46 qui se présente dans son ensemble comme une longue cage ajourée de section transversale rectangulaire, est surmontée d'une plaque 47, boulonnée elle-même à une autre plaque 48, solidaire du cylindre du vérin 19. Comme on le voit à la Fig. 8, ces plaques 47 et 48 sont traversées à quatre reprises par le câble métallique 23 dont une extrémité est bloquée dans le serre-câble 35 solidaire de la plaque 48.

A la partie supérieure du dispositif, le vérin 19 est fixé au profilé métallique 44 par l'intermédiaire d'un ensemble de pièces métalliques 49, 50, 51 et 52. La pièce 52 porte également l'axe de la poulie 31.

L'ensemble formé par le cylindre du vérin 19 et par la structure métallique 46 est ainsi fixé au profilé 44, parallèlement à celui-ci.

Le profilé 44 porte les deux rails 16, boulonnés chacun à un des bords de son plat le plus large. Le chariot 15 qui porte la sonde 14 peut se déplacer le long de ces rails 16, boulonnés au profilé 44 grâce aux roulettes 53 dont il est muni (voir également la Fig. 12).

La position de la sonde 14 dans la gaine 1 peut être déterminée à tout moment grâce à un codeur de position angulaire 54 montré aux Fig. 7, 10 et 13. Ce codeur 54 comprend un disque codé optiquement et un dispositif optique et électronique interne. Le disque est couplé mécaniquement à la poulie 31 dont la gorge accueille le câble métallique 23 qui entraîne le chariot 15. Le dispositif optique et électronique produit 1000 impulsions électriques pour chaque tour de la poulie 31 et transmet ces impulsions vers l'ensemble de gestion assisté par ordinateur (voir Fig. 15).

La tension du câble métallique 23 est réglée grâce à un dispositif régulateur de tension 55 représenté à la Fig. 7. Ce dispositif régulateur de tension 55 est monté sur la structure métallique 46 et porte le serre-câble 36. La tension exercée sur le câble métallique 23 peut également être réglée grâce à une tige filetée qui porte la poulie 30.

La tension du câble électrique 24 est réglée grâce à un dispositif régulateur de tension 56 monté à la partie supérieure du cylindre du vérin 19 et portant un serre-câble 57 (d'où le câble électrique 24 sort du dispositif en passant par le manchon 42).

La Fig. 7 montre encore une petite roue à gorge 58 montée sur un axe horizontal porté par une pièce 59 solidaire de la pièce 51. Cette petite roue à gorge 58 guide le câble métallique 23 et, depuis la poulie 31, l'amène à la verticale de son point de fixation au chariot 15.

La sonde radioactive à transmission 14 qui est représentée aux Fig. 3 à 7 sera décrite plus en détail en se référant aux Fig. 11 et 12.

La sonde 14 qui est montée sur le chariot 15 et qui se déplace donc avec celui-ci dans la gaine 1 en forme de U, comprend une source radioactive 60 et un détecteur nucléaire désigné sous la référence générale 61. Comme le montre la Fig. 11, la source 60 est logée dans une des branches du U, tandis que le détecteur 61 se trouve en vis-à-vis de celle-ci, dans l'autre branche du U.

La source 60 est incluse dans un boulon 62 introduit dans un bloc porte-source 63 qui consiste en un caisson en acier rempli de plomb et qui est muni d'un trou collimateur 64 dirigé vers le détecteur 61. Celui-ci est porté de manière analogue dans un bloc porte-détecteur 65 en métal, qui est muni d'une fenêtre 66 tournée vers la source 60.

Les rayons gamma émis par la source 60 et passant par le trou collimateur 64 traversent le couloir vertical 2 et passent par la fenêtre 66 pour atteindre le détecteur 61 en suivant une trajectoire horizontale.

Les parois latérales internes 11 de la gaine 1 sont traversées par les rayons gamma, ce qui permet donc d'effectuer des mesures d'absorption de rayonnement sur une matière externe au dispositif, comprise dans le couloir vertical 2, tout en préservant ce dispositif des contacts directs avec le milieu étudié.

Une partie du rayonnement gamma émis par la source 60 est déviée ou absorbée par les particules solides en suspension dans le mélange eau-sédiments contenu dans le couloir vertical 2 et n'atteint donc pas ou pas directement le détecteur nucléaire 61 qui enregistre donc principalement la partie du rayonnement gamma qui n'est pas déviée ou absorbée par le milieu traversé.

Le rayonnement gamma résiduel et non absorbé, émis par la source 60 et capté par le détecteur 61 peut être converti ensuite par l'ensemble de gestion assisté par ordinateur en mesure de densité du mélange eau-sédiments. La source radioactive 60 consiste en une perle de céramique de $^{137}$Cs à double encapsulation. Cette source de 5mC$_i$ est capable d'émettre des rayonnements de 0,661 MeV. La demi-vie du $^{137}$Cs étant de 30 ans, la baisse d'émission des rayons gamma n'est que d'environ 2,4% par an, ce qui revient à dire que les taux d'émission sont pratiquement constants pendant trois ou quatre mois.

D'autres types de sources radioactives peuvent être utilisés. Pour des raisons de sécurité, des dispositifs pour obturer le trou collimateur 64 lorsque la sonde 14 n'est pas en service peuvent être prévus.

Le détecteur nucléaire 61 consiste en un compteur à scintillation. Il est muni d'un cristal de NaI(Tl), d'un photomultiplicateur et d'une unité électronique d'alimentation et d'amplification. Ces éléments sont rassemblés dans un boîtier cylindrique 67 étanche en PVC monté sur le chariot 15.

Le cristal qui reçoit les rayons gamma qui n'ont été ni déviés ni absorbés, émet des photons en quantité proportionnelle au rayonnement reçu. Le photomultiplicateur et l'unité électronique d'alimentation et d'amplification convertissent ces photons en des impulsions électriques d'une forme appropriée pour être envoyées à une unité électronique d'adaptation faisant partie de l'ensemble de gestion (voir Fig. 15).

Bien entendu, d'autres types de détecteurs nucléaires peuvent être utilisés sans sortir du cadre de la présente invention.

La Fig. 13 est une vue analogue à la Fig. 7, mais les éléments mécaniques du dispositif y sont montrés dans la position de la Fig. 5, c'est-à-dire que le chariot 15 se trouve ici dans sa position 15c, tandis que la tige de piston 22 du vérin 19 et la chape 43 qu'elle porte se trouvent dans leur position basse 22c et 32c. On remarquera que le chariot 15 est en contact avec l'interrupteur de fin de course supérieur 18.

La Fig. 14 est une vue en perspective de la chambre 3, vue obliquement par au-dessus. Sur cette Fig. 14 (tout comme sur la Fig. 2), la gaine 1 est représentée vide de tout autre élément du dispositif.

La chambre 3 est délimitée latéralement par quatre parois 68, 69, 70 et 71 et son fond est constitué par trois parois horizontales 72, 73 et 74.

Les parois 10, 11 et 12 de la gaine 1 (voir Fig. 2) se prolongent vers le haut à l'intérieur de la chambre 3, en délimitant ainsi, avec la paroi horizontale 74, la paroi verticale 68 et une partie de chacune des parois verticales 69 et 71, un bac de calibrage 75.

Lorsqu'on le désire, la sonde 14, amenée dans la chambre 3, peut être étalonnée avec différents milieux de densité connue, versés dans le bac de calibrage 75.

Il est à noter que si, lors du fonctionnement de l'installation, une fuite se produisait dans la gaine 1, le chariot 15 serait immédiatement ramené dans la chambre 3, et que le fonctionnement de l'installation serait arrêté. En effet, un dispositif détecteur de fuites (non représenté sur les Fig. 1 à 14) installé dans la gaine 1 est raccordé à l'ensemble de gestion qui, en cas de détection de fuite, commande la remontée immédiate du chariot 15 jusque dans la chambre 3.

Le fonctionnement général de l'installation suivant l'invention sera mieux compris en se référant à la Fig. 15, sur laquelle un seul dispositif de mesure est représenté.

Cette installation est répartie, sur la drague autoporteuse, en trois sites différents. La gaine 1 du dispositif de mesure se trouve dans un puits de la drague autoporteuse, symbolisé sur la Fig. 15 par la lettre A. Sur le pont de la drague autoporteuse, symbolisé par la lettre B, sont installés un groupe hydraulique 76 et une boîte de jonction relais 77. Un ensemble de gestion assisté par ordinateur, désigné par la lettre C, est installé sur la passerelle de commande où il peut être mis en route et contrôlé par un opérateur.

Il est rappelé que la gaine 1 contient le mécanisme qui produit le mouvement alternatif de bas en haut de la sonde 14 dans cette gaine 1. Ce mouvement est actionné par le vérin hydraulique 19 (non représenté sur la Fig. 15) qui est raccordé au groupe hydraulique 76 via les conduites 20 et 21.

La gaine 1 contient également cinq détecteurs, à savoir :

- le détecteur nucléaire 61;
- le détecteur de fuites 78;
- l'interrupteur de fin de course inférieur 17;
- l'interrupteur de fin de course supérieur 18, et
- le codeur de position angulaire 54.

Le groupe hydraulique 76 qui est raccordé au vérin hydraulique 19, provoque la montée et la descente de la sonde 14 grâce à des distributeurs hydrauliques à commande électrique 79 qui, par l'intermédiaire de relais 80, peuvent être actionnés automatiquement par l'interface de commande 81 de l'ensemble de gestion C pendant le fonctionnement normal, ou manuellement grâce à des interrupteurs non représentés sur la Fig. 15 qui peuvent être utilisés lors d'opérations de maintenance, de réparation ou de test. Les distributeurs hydrauliques à commande électrique 79 permettent également de régler la vitesse de déplacement du chariot 15.

L'ensemble de gestion assisté par ordinateur C reçoit les signaux que lui transmettent les cinq détecteurs installés dans la gaine 1. Il commande la montée et la descente de la sonde 14 en fonction, des signaux qu'il reçoit des interrupteurs de fin de course inférieur 17 et supérieur 18 et du détecteur de fuites 78.

L'ensemble de gestion C traite aussi l'ensemble des signaux qu'il reçoit du détecteur nucléaire 61, des interrupteurs de fin de course inférieur 17 et supérieur 18 et du codeur de position angulaire 54, pour en déduire des mesures de densités et de poids total des matériaux de dragage chargés dans le puits du bateau et il affiche les résultats de ces mesures.

Cet ensemble de gestion assisté par ordinateur C comprend principalement :

- une interface de commande 81;
- une unité d'adaptation et d'alimentation 82;
- une interface de comptage 83 munie d'un dispositif de présélection du temps de comptage 84;
- un indicateur de position 85 muni d'un dispositif de présélection de position 86;
- des interrupteurs de début et de fin de chargement 87;
- un ordinateur 88 muni d'un logiciel spécifique et pourvu de divers appareillages périphériques complémentaires;
- une interface entrée/sortie 89 entre l'interface de commande 81 et l'ordinateur 88, et
- une porte entrée/sortie 90 entre l'interface de comptage 83 et l'ordinateur 88.

Il est à noter que dans le cas de l'installation de l'invention comporte plusieurs dispositifs de mesure (et non un seul comme représenté sur la Fig. 15), l'interface de commande 81, l'unité d'adaptation t d'alimentation 82, l'interface de comptage 83 et l'indicateur de position 85 sont multi-canaux.

Les impulsions électriques amplifiées provenant du détecteur nucléaire 61 sont reçues par l'unité d'adaptation et d'alimentation 82 qui a plusieurs fonctions. Elle sert tout d'abord à fournir les tensions d'alimentation exigées par le détecteur nucléaire 61. Elle permet de mesurer et de régler les tensions d'alimentation et les impulsions électriques reçues. Enfin, elle transforme les impulsions électriques d'entrée, reçues du détecteur nucléaire 61, en des impulsions électriques de sortie adaptées pour être reçues et traitées par l'interface de comptage 83.

Cette interface de comptage 83 est pourvue d'un dispositif de présélection du temps de comptage 84 au cours duquel sont comptées les impulsions en provenance du détecteur. Ces périodes de comptage seront, par exemple, réglées pour une durée de 0,4 s. Pendant la montée de la sonde 14 dans la gaine 1, les impulsions reçues par l'interface de comptage 83 seront comptées à intervalles réguliers (déterminés grâce au codeur de position angulaire 54 et de l'indicateur de position à présélection), à chaque fois pendant une durée de 0,4 s. Les impulsions comptées par l'interface de comptage 83 sont transmises à l'ordinateur 88 qui les transforme en mesures de densité et de poids total et affiche ces mesures au moyen d'un dispositif d'affichage visuel et d'éventuels appareillages périphériques.

Avant la mise en route de l'installation, le chariot 15 se trouve dans la position de repos 15c, dans laquelle il est en contact avec l'interrupteur de fin de course supérieur 18. Après un contrôle statique du détecteur 16 par l'intermédiaire de l'ensemble de gestion C et de l'ordinateur, le chariot 15 est envoyé vers la position 15a où il actionne l'interrupteur de fin de course inférieur 17. Le compteur de l'indicateur de position 85 est alors mis à zéro par l'interface de commande 81. Le signal de départ du processus de mesure proprement dit est donné en actionnant l'interrupteur de début de chargement 87. De ce fait, le chariot 15 est envoyé vers le haut jusqu'à ce qu'il actionne l'interrupteur de fin de course supérieur 18 et que le chariot est renvoyé vers le bas en un processus continu.

Pendant le mouvement du chariot 15 vers le haut, l'indicateur de position 85 totalise les impulsions électriques reçues du codeur de position angulaire 54 et affiche continuellement ce total sur son compteur digital jusqu'à ce que le chariot 15, en position 15c, actionne à nouveau l'interrupteur de fin de course supérieur 18. Il est à noter que lors de la descente du chariot 15, l'indicateur de position 85 décompte continuellement les impulsions reçues du codeur de position angulaire 54 du nombre total d'impulsions qui avaient été enregistrées lorsque le chariot 15 se trouvait dans la position 15c.

Le codeur de position angulaire 54 émet 1000 impulsions pour chaque révolution de la poulie 31. Dans un exemple d'installation suivant l'invention, le codeur de position angulaire 54 émet environ 24.000 impulsions pour un parcours du chariot 15 de 14 mètres entre le moment où il est en contact avec l'interrupteur de fin de course inférieur 17 et le moment où il actionne l'interrupteur de fin de course supérieur 18.

L'indicateur de position 85 est pourvu d'un dispositif de présélection de position 86 qui émet un signal à intervalles réguliers, au cours de la montée du chariot 15, à chaque fois qu'un nombre prédéterminé d'impulsions est reçu du codeur de position angulaire 54. Le parcours total (14 m) de la sonde 14 est ainsi divisé en tronçons ou "fenêtres" de longueur identique.

On peut, par exemple, décider de diviser le parcours total de la sonde 14 en 113 "fenêtres" égales, qui auront donc chacune une hauteur de 12,4 cm. Pour ce faire, le dispositif de présélection de position 86 sera réglé de manière à émettre un signal après chaque série de 212 impulsions

$$\left(\frac{24.000}{113}\right)$$

reçues par l'interface de comptage 83.

Les signaux de sortie émis par le dispositif de présélection de position 86 sont envoyés à l'interface de comptage 83 qui, après réception de chaque signal, reçoit et totalise pendant 0,4 s les impulsions venant de l'unité d'adaptation et d'alimentation 82. L'interface de comptage 83 mémorise les taux de comptage enregistrés dans toutes les "fenêtres". A sa sortie, l'interface de comptage 83 délivre -donc les nombres d'impulsions comptées pendant une période de 0,4 s dans chacune des "fenêtres". Ces impulsions sont transmises à l'ordinateur 88, via la porte entrée/sortie 90.

Comme la sonde 14 se déplace de bas en haut à une vitesse d'environ 22 à 25 cm/s, elle parcourt environ 8,8 à 10 cm en 0,4 s (période de comptage dans chaque fenêtre). Après chaque période de comptage, il reste donc à la sonde 14 à parcourir une distance de 2,4 à 3,6 cm avant que ne débute la période de comptage suivante (dans la "fenêtre" suivante). Le temps de 0,10 à 0,16 s que dure ce parcours de 2,4 à 3,6 cm est libre pour la transmission des données du détecteur nucléaire 61 vers l'interface de comptage 83.

L'interface de commande 81 transfère à l'ordinateur 88 les informations des interrupteurs de début et de fin de chargement 87, des interrupteurs de fin de course inférieur 17 et supérieur 18 et du détecteur de fuites 78. En fonction des informations ainsi reçues et du programme dont il est muni, l'ordinateur 88 envoie à l'interface de commande 81 des instructions pour le mouvement du chariot 15 vers le haut ou vers le bas. Par suite de ces instructions reçues, l'interface de commande 81 actionne, de manière appropriée, les relais 80 qui commandent le fonctionnement des distributeurs hydrauliques 79 du groupe hydraulique 76.

La communication de l'interface de commande 81 vers l'ordinateur 88, et retour, s'effectue via l'interface entrée/sortie 89 incorporée dans l'ordinateur 88.

Après que l'interrupteur de début de chargement 87 a été actionné, l'ordinateur 88 commande, en fonction de son programme, le retour du chariot 15, vers le bas, à chaque fois que celui-ci actionne l'interrupteur de fin de course 18, et l'envoi du chariot 15 vers le haut à chaque fois que celui-ci actionne l'interrupteur de fin de course inférieur 17. Ce mouvement alternatif de haut en bas, et retour, du chariot 15 se poursuit jusqu'au moment où l'interrupteur de fin de chargement 87 est mis en position arrêt.

Après quoi, le chariot 15 retourne à la position 15c.

Il a été dit plus haut que, lors de la descente du chariot 15, l'indicateur de position 85 décompte continuellement les impulsions reçues du codeur de position angulaire 54 du nombre total d'impulsions qui avaient été enregistrées lorsque le chariot 15 se trouvait dans sa position 15c. De ce fait, le compteur digital de l'indicateur de position 85 devrait théoriquement être revenu à zéro au moment où le chariot 15 actionne l'interrupteur de fin de course inférieur 17. Toutefois, chaque impulsion délivrée par le codeur de position angulaire 54 correspond à un déplacement du chariot 15 sur une distance d'environ 0,58 mm seulement. On comprendra dès lors que par suite de certains phénomènes inévitables (dilatation thermique du câble métallique 23, léger glissement de ce câble métallique 23 sur la poulie 31, etc.), le compteur de l'indicateur de position 85 n'est généralement pas revenu exactement à zéro au moment où le chariot 15 actionne l'interrupteur de fin de course inférieur 17. Pour cette raison, l'interface de commande 81 envoie à l'indicateur de position 85 un signal de mise à zéro, à chaque fois que le chariot 15 actionne l'interrupteur de fin de course inférieur 17.

L'ordinateur 88 est pourvu de divers périphériques tels que : écran vidéo couleur, imprimante, unités de disques mémoires et enregistreur sur bande. Ces deux derniers éléments constituent la mémoire externe de l'ordinateur 88.

Sur l'écran vidéo sont affichés graphiquement l'état de chargement du puits du bateau dragueur, en fonction du temps, et également d'autres paramètres tels que le moment de début de chargement, les temps intermédiaires, la vitesse de chargement, le poids total de chargement, le moment de début de débordement, etc.

Lorsque le chargement est terminé et que le fonctionnement de l'installation est arrêté en actionnant l'interrupteur de fin de chargement 87 en "position arrêt", le chariot 15 est renvoyé vers la position 15c et, l'imprimante reliée à l'ordinateur 88 produit alors un rapport imprimé qui fait apparaître les divers paramètres et caractéristiques du cycle de chargement.

La description qui est donnée ci-dessus avec référence aux dessins ne concerne évidemment qu'une forme d'exécution particulière de l'installation suivant l'invention. De nombreuses modifications peuvent être apportées à cette forme d'exécution sans pour autant sortir du cadre de l'invention.

C'est ainsi que le mécanisme avec vérin pour déplacer la sonde 14 le long d'un trajet vertical dans la gaine 1, peut être remplacé par d'autres mécanismes de déplacement.

Une autre forme de réalisation du mécanisme de déplacement peut être constituée d'un moteur électrique pourvu d'un frein électromécanique, réducteur de vitesse, d'un tambour de câble et d'un codeur de position angulaire.

La combinaison du moteur électrique et du réducteur de vitesse peut être un motoréducteur. Un câble combiné assurant la traction mécanique et la transmission des signaux électriques est monté sur le tambour et est relié au chariot 15. La transmission des signaux électriques du chariot 15 vers l'ensemble de gestion C est réalisée par l'intermédiaire d'une unité à bagues collectrices incorporée au tambour.

Le moteur électrique commande le mouvement ascendant et descendant du chariot en fonction du programme et des commutateurs de fin de course 17 et 18 prévus aux parties supérieure et inférieure de la gaine 1. Le câble est maintenu tendu par le poids du chariot 15. Un frein de retenue assure le maintien en place du chariot 15 à l'arrêt du système. Le chariot 15 est fixé sur les rails 16 par des roulettes 53 comme dans le cas du système à commande hydraulique.

Un dispositif de verrouillage mécanique prévu sur le chariot 15 est activé en cas de rupture de câble, ce qui évite la chute du chariot 15.

En vue de régler la vitesse, le système peut être pourvu d'une commande de fréquence électronique ou d'une commande par thyristor à quatre quadrants avec un générateur tachymétrique associé sur le moteur.

Le codeur de position angulaire mesure, comme dans le cas du système hydraulique, la position du chariot 15 entre les positions supérieure 15c et inférieure 15a.

## Revendications

1. Installation de mesure continue de la densité et du poids total de matériaux de dragage chargés dans un puits de drague autoporteuse, comportant au moins une sonde radioactive (14) abritée dans une gaine (1) étanche, fixée sensiblement à la verticale dans le puits, ladite sonde (14) comportant une source radio-active (60) et un détecteur nucléaire (61), le détecteur (61) étant équipé de moyens pour transformer le rayonnement nucléaire en données analysables, ladite installation étant caractérisée en ce qu'elle comporte :

   (i) un ou plusieurs dispositifs comportant chacun

   - la gaine (1), celle-ci présentant une section transversale en substance en forme de U, les deux branches en U formant une sorte de couloir vertical semi-ouvert (2);
   - la sonde radioactive (14), celle-ci étant de type à transmission, la source radioactive (60) émettant en direction du détecteur nucléaire (61), la source radioactive (60) et le détecteur nucléaire (61) étant placés en vis-à-vis l'un de l'autre, chacun dans une branche du U, le détecteur nucléaire (61) étant équipé de moyens pour transformer le rayonnement nucléaire en photons, puis en impulsions électriques et pour amplifier ensuite ces impulsions ;
   - des mécanismes de guidage (16, 53) permettant de guider ladite sonde (14) le long d'un trajet vertical dans la gaine (1);
   - des mécanismes pour faire se déplacer ladite sonde (14) vers le haut et vers le bas le long de ce trajet vertical dans la gaine (1);
   - des moyens (54) de détermination de la position de ladite sonde (14) dans la gaine (1);

(ii) un ensemble de gestion assisté par ordinateur (C), cet ensemble de gestion (C) étant capable de mesurer et enregistrer le temps, de recevoir et traiter les données collectées par les moyens (54) de détermination de la position de la ou des sonde(s) (14) dans la ou les gaine(s) (1), de recevoir et traiter les données collectées par le ou les détecteur(s) nucléaire(s) (61) sous la forme d'impulsions électriques comptées au cours d'intervalles réguliers préfixés et converties en mesures correspondantes de densité, de calculer à partir de ces mesures le poids total de matériaux de dragage chargés dans le puits, de conserver toutes les données dans une mémoire centrale, d'afficher l'analyse et le résultat de ces mesures à l'aide d'un dispositif d'affichage visuel et/ou d'une imprimante et, en fonction d'un programme présélectionné, de régler et commander le fonctionnement général de l'installation;

(iii) des moyens de transmission à l'ensemble de gestion (C) des impulsions électriques fournies par le ou les détecteur(s) nucléaire(s) (61) et par les moyens (54) de détermination de la position de la ou des sonde(s) (14) dans la ou les gaine(s) (1).

2. Installation suivant la revendication 1, caractérisée en ce que la gaine (1) est fabriquée en acier.

3. Installation suivant l'une quelconque des revendications précédentes, caractérisée en ce que la source radioactive (60) est une source de rayons gamma.

4. Installation suivant la revendication 3, caractérisée en ce que la source radioactive (60) consiste en une perle de céramique de $^{137}$Cs à double encapsulement.

5. Installation suivant l'une quelconque des revendications précédentes, caractérisée en ce que le détecteur nucléaire (61) consiste en un compteur à scintillation.

6. Installation suivant la revendication 5, caractérisée en ce que les moyens pour transformer le rayonnement nucléaire en photons consistent en un cristal de NaI(Tl).

7. Installation suivant la revendication 6, caractérisée en ce que les moyens pour transformer les photons en impulsions électriques et les moyens pour amplifier les impulsions électriques consistent respectivement en un photomultiplicateur et en une unité électronique d'alimentation et d'amplification.

8. Installation suivant l'une quelconque des revendications précédentes, caractérisée en ce que la sonde (14) est montée sur un chariot (15).

9. Installation suivant la revendication 8, caractérisée en ce que les mécanismes de guidage de la sonde (14) consistent en des rails métalliques (16) disposés verticalement dans la gaine (1) et en des roulettes (53) montées sur le chariot (15).

10. Installation suivant la revendication 9, caractérisée en ce que les mécanismes pour faire se déplacer la sonde (14) le long du trajet vertical dans la gaine (1) comportent un vérin (19) muni d'une tige de piston (22) qui peut se déplacer verticalement dans la gaine (1).

11. Installation suivant la revendication 10, caractérisée en ce que les mécanismes pour faire se déplacer la sonde (14) le long du trajet vertical dans la gaine (1) comportent un mécanisme de transmission apte à transmettre le mouvement de la tige de piston (22) au chariot (15) en multipliant l'amplitude de ce mouvement.

12. Installation suivant la revendication 11, caractérisée en ce que le mécanisme de transmission comporte des poulies (26, 27, 28, 29) montées sur un axe (25) solidaire de l'extrémité de la tige de piston (22), des poulies fixes (30, 31, 32, 33) solidaires de la gaine (1) et un câble métallique (23) arrimé au chariot (15) et passant sur les poulies (26, 27, 28, 29, 30, 31, 32, 33).

13. Installation suivant l'une quelconque des revendications 11 et 12, caractérisée en ce que le mécanisme de transmission est tel que tout déplacement de la tige de piston (22) entraîne un déplacement en sens inverse de la sonde (14).

14. Installation suivant l'une quelconque des revendications 12 et 13, caractérisée en ce que les moyens de détermination de la position de la sonde (14) dans la gaine (1) comportent un codeur de position angulaire (54) muni d'un disque codé optiquement et d'un dispositif optique et électronique interne, le disque étant couplé mécaniquement à une des poulies fixes (31) sur laquelle passe le câble métallique (23).

15. Installation suivant la revendication 9, caractérisée en ce que les mécanismes pour faire se déplacer la sonde (14) le long du trajet vertical dans la gaine (1) comportent un moteur électrique pourvu d'un frein électromécanique, un réducteur de vitesse, un tambour d'enroulement pour câble.

16. Installation suivant la revendication 15, caractérisée en ce qu'elle est pourvue de moyens pour régler la vitesse de déplacement de la sonde (14), ces moyens comportant une commande électronique de fréquence.

17. Installation suivant la revendication 15, caractérisée en ce qu'elle est pourvue de moyens pour régler la vitesse de déplacement de la sonde (14), ces moyens comptant un régulateur à quatre quadrants et un générateur tachymétrique monté sur le moteur électrique.

18. Installation suivant l'une quelconque des revendications 15, 16 et 17, caractérisée en ce que les moyens de détermination de la position de la sonde (14) dans la gaine (1) comportent un codeur de position angulaire muni d'un disque codé optiquement et d'un dispositif optique et électronique interne, le disque étant couplé mécaniquement à une partie rotative dont le mouvement est en rapport avec le déplacement de la sonde (14).

19. Installation suivant l'une quelconque des revendications précédentes, caractérisée en ce qu'elle comporte, en outre, aux extrémités du trajet vertical parcouru par la sonde (14) dans la gaine (1), des interrupteurs de fin de course inférieur (17) et supérieur (18) aptes à transmettre des données à l'ensemble de gestion (C) assisté par ordinateur.

20. Installation suivant la revendications 19, caractérisée en ce que l'ensemble de gestion (C) est doté d'un programme permettant notamment que le détecteur nucléaire (61) qui effectue des mesures continues, les transmette à l'ensemble de gestion (C) lorsque la sonde (14) se déplace de l'interrupteur de fin de course inférieur (17) à l'interrupteur de fin de course supérieur (18) selon un trajet vertical dans la gaine (1) et retourne à sa position de départ sans effectuer de mesures.

21. Installation suivant l'une quelconque des revendications 19 et 20, caractérisé en ce que la gaine (1) est surmontée d'une chambre (3) disposée au-dessus du niveau maximum de remplissage du puits.

22. Installation suivant la revendication 21, caractérisée en ce que la chambre (3) est apte à accueillir le chariot (15) et la sonde (14) et à servir au stockage de ceux-ci pendant le temps ou l'installation n'est pas en fonctionnement.

23. Installation suivant la revendication 22, caractérisée en ce que l'interrupteur de fin de course supérieur (18) est situé au-dessus du niveau de la chambre (3).

24. Installation suivant l'une quelconque des revendications 21 à 23, caractérisé en ce que la chambre (3) comporte un bac de calibrage (75) situé dans le prolongement du couloir (2) compris entre les branches de la gaine en U (1), ce bac de calibrage (75) étant apte à contenir des milieux de densité connue servant au calibrage de la sonde (14).

25. Installation suivant l'une quelconque des revendications 21 à 24, caractérisée en ce qu'elle comporte, en outre, un détecteur de fuites (78) capable de détecter la présence dans la gaine (1) de matières solides ou liquides qui y entreraient à la suite d'une fuite et de transmettre une information correspondante à l'ensemble de la gestion (C).

26. Installation suivant la revendication 25, caractérisée en ce que l'ensemble de gestion (C) est capable de commander, en cas de fuite, l'envoi immédiat de la sonde (14) dans la chambre (3) et l'interruption du fonctionnement de l'installation.

27. Installation suivant l'une quelconque des revendications précédentes, caractérisé en ce que l'ensemble de gestion (C) comporte, en outre, une mémoire externe.

**Patentansprüche**

1. Vorrichtung zum kontinuierlichen Messen der Dichte und des Gesamtgewichts des in einem Schacht eines Schwimmbaggers enthaltenen Baggermaterials mit mindestens einer wasserdichten radioaktiven Sonde (14), die in einem wasserdichten Mantel (1) untergebracht ist, der etwa in der Vertikalen im Schacht angeordnet ist, wobei die Sonde (14) eine radioaktive Quelle (60) und einen Nukleardetektor (61) aufweist, wobei der Detektor (61) mit Mitteln zum Umwandeln der Kernstrahlung in analysierbare Daten ausgestattet ist, und wobei die Vorrichtung gekennzeichnet ist durch:

(i) mindestens eine Einrichtung, von denen jede aufweist

- den Mantel (1), der einen im wesentlichen U-förmigen Querschnitt aufweist, wobei die beiden Arme des U eine Art vertikalen halb-geöffneten Durchgang (2) bilden;
- die radioaktive Sonde (14), die eine Strahlungssonde ist, wobei die radioaktive Quelle (60) in Richtung des Nukleardetektors (61) ausstrahlt, und wobei die radioaktive Quelle (60) und der Nukleardetektor (61) einander gegenüber jeweils in einem Arm des U angeordnet sind, und wobei der Nukleardetektor (61) mit Mitteln zum Umwandeln der Kernstrahlung in Photonen und danach in elektrische Impulse und zum anschließenden Verstärken dieser Impulse ausgestattet ist;
- Führungseinrichtungen (16, 53), die es erlauben, die Sonde (14) entlang einer vertikalen Bahn in dem Mantel (1) zu führen;
- Einrichtungen zum Verschieben der Sonde (14) nach oben und nach unten entlang der vertikalen Bahn in dem Mantel (1);
- Mittel (54) zur Bestimmung der Position der Sonde (14) in dem Mantel (1);

(ii) eine computergestützte Steuerungsanordnung (C), wobei diese Steuerungsanordnung (C) in der Lage ist, die Zeit zu messen und aufzuzeichnen, die von den Mitteln (54) zur Positionsbestimmung der Sonde(n) (14) in dem Mantel oder den Mänteln (1) gesammelten Daten zu empfangen und zu verarbeiten, die Daten, die von dem oder den Nukleardetektor(en) (61) in Form von elektrischen Impulsen gesammelt werden, welche im Verlauf von regelmäßigen festgelegten Intervallen gezählt und in der Dichte entsprechenden Messungen umgewandelt werden, zu empfangen und zu verarbeiten, aus diesen Messungen das Gesamtgewicht des in dem Schacht enthaltenen Baggermaterials zu berechnen, alle Daten in einem Hauptspeicher aufzubewahren, die Analyse und das Ergebnis dieser Messungen mit Hilfe einer visuellen Anzeigevorrichtung und/oder eines Druckers darzustellen, und in Abhängigkeit von einem vorgewählten Programm das allgemeine Funktionieren der Einrichtung zu regeln und zu steuern;
(iii) Mittel zum Übertragen von elektrischen Impulsen an die Steuerungsanordung (C), wobei die Impulse von dem oder den Nukleardetektor(en) (61) und von den Mitteln (54) zur Bestimmung der Position der Sonde(n) (14) in dem Mantel oder den Mänteln (1) geliefert werden.

2. Vorrichtung nach Anspruch 1 dadurch gekennzeichnet, daß der Mantel (1) aus Stahl hergestellt ist.

3. Vorrichtung nach einem der vorhergehenden Ansprüche, dadurch gekennzeichnet, daß die radioaktive Quelle (60) eine Gammastrahlen-Quelle ist.

4. Vorrichtung nach Anspruch 3, dadurch gekennzeichnet, daß die radioaktive Quelle (60) aus einer doppelten verkapselten Keramikperle mit $^{137}$Cs besteht.

5. Vorrichtung nach einem der vorhergehenden Ansprüche, dadurch gekennzeichnet, daß der Nukleardetektor (61) aus einem Szintillationszähler besteht.

6. Vorrichtung nach Anspruch 5, dadurch gekennzeichnet, daß die Mittel zum Umwandeln der Kernstrahlung in Photonen aus einem NaI (TI)-Kristall bestehen.

7. Vorrichtung nach Anspruch 6, dadurch gekennzeichnet, daß die Mittel zum Umwandeln der Photonen in elektrische Impulse und die Mittel zum Verstärken der elektrischen Impulse aus einem Photovervielfacher bzw. aus einer elektronischen Versorgungs- und Verstärkungseinheit bestehen.

8. Vorichtung nach einem der vorhergehenden Ansprüche, dadurch gekennzeichnet, daß die Sonde (14) auf einem Wagen (15) angeordnet ist.

9. Vorrichtung nach Anspruch 8, dadurch gekennzeichnet, daß die Führungseinrichtungen der Sonde (14) aus senkrecht in dem Mantel (1) angeordneten metallischen Schienen (16) und aus an dem Wagen (15) montierten Rollen (53) bestehen.

10. Vorrichtung nach Anspruch 9, dadurch gekennzeichnet, daß die Einrichtungen zum Verschieben der Sonde (14) entlang einer vertikalen Bahn in dem Mantel (1) einen Zylinder (19) mit einer vertikal in dem Mantel (1) beweglichen Kolbenstange (22) aufweisen.

11. Vorrichtung nach Anspruch 10, dadurch gekennzeichnet, daß die Einrichtungen zum Verschieben der Sonde (14) entlang einer vertikalen Bahn in dem Mantel (1) eine Übertragungseinrichtung aufweisen, die geeignet ist, die Bewegung der Kolbenstange (22) auf den Wagen (15) zu übertragen, wobei der Umfang dieser Bewegung vervielfacht wird.

12. Vorrichtung nach Anspruch 11, dadurch gekennzeichnet, daß die Übertragungseinrichtung Antriebsscheiben (26, 27, 28, 29), die auf einer mit dem Ende der Kolbenstange (22) verbundenen Achse (25) angeordnet sind, feste und mit dem Mantel verbundene Antriebsscheiben (30, 31, 32, 33) und ein metallisches Kabel (23) aufweisen, das am Wagen befestigt ist und über die Antriebsscheiben (26, 27, 28, 29, 30, 31, 32, 33) läuft.

13. Vorrichtung nach einem der Ansprüche 11 und 12, dadurch gekennzeichnet, daß die Übertragungseinrichtung derart ausgebildet ist, daß jede Verschiebung der Kolbenstange (22) eine Verschiebung der Sonde (14) in umgekehrter Richtung mit sich bringt.

14. Vorrichtung nach einem der Ansprüche 12 und 13, dadurch gekennzeichnet, daß die Mittel zum Bestimmen der Position der Sonde (14) in dem Mantel (1) eine Kodierscheibe (54) mit einer optisch kodierten Scheibe und einer eingebauten optischen und elektronischen Vorrichtung aufweisen, wobei die Scheibe mechanisch an eine der festen Antriebscheiben (31), über die das metallische Kabel (23) verläuft, gekoppelt ist.

15. Vorrichtung nach Anspruch 9, dadurch gekennzeichnet, daß die Einrichtungen zum Verschieben der Sonde (14) entlang der vertikalen Bahn in dem Mantel (1) einen Elektromotor mit einer elektromechanischen Bremse, einen Drehzahlminderer und eine Seiltrommel für das Kabel aufweisen.

16. Vorrichtung nach Anspruch 15, dadurch gekennzeichnet, daß sie Mittel zum Regeln der Verschiebegeschwindigkeit der Sonde (14) aufweist, wobei diese Mittel eine elektronische Frequenzsteuerung aufweisen.

17. Vorrichtung nach Anspruch 15, dadurch gekennzeichnet, daß sie Mittel zum Regeln der Verschiebegeschwindigkeit der Sonde (14) aufweist, wobei diese Mittel einen Vierquadranten-Regler und einen auf dem Elektromotor angeordneten Tachosignalgeber aufweisen.

18. Vorrichtung nach einem der Ansprüche 15, 16 und 17, dadurch gekennzeichnet, daß die Mittel zum Bestimmen der Position der Sonde (14) in dem Mantel (1) eine Kodierscheibe mit einer optisch kodierten Scheibe und einer eingebauten optischen und elektronischen Vorrichtung aufweisen, wobei die Scheibe mechanisch an ein drehbares Teil gekoppelt ist, dessen Bewegung mit der Verschiebung der Sonde (14) in Zusammenhang steht.

19. Vorrichtung nach einem der vorhergehenden Ansprüche, dadurch gekennzeichnet, daß sie ferner an den Enden der von der Sonde (14) durchlaufenen vertikalen Bahn in dem Mantel (1) untere (17) und obere (18) Endstellungsschalter aufweist, die in der Lage sind, Daten an die computergestützte Steuerungsanordnung (C) zu übertragen.

20. Vorrichtung nach Anspruch 19, dadurch gekennzeichnet, daß die Steuerungsanordnung (C) mit einem Programm versehen ist, das es insbesondere erlaubt, daß der die kontinuierlichen Messungen vornehmende Nukleardetektor (61) diese zur Steuerungsanordnung (C) überträgt, wenn die Sonde (14) entlang einer vertikalen Bahn in dem Mantel (1) vom unteren Endstellungsschalter (17) zum oberen Endstellungsschalter (18) verschoben wird und an ihre Ausgangsposition zurückkehrt, ohne Messungen durchzuführen.

21. Vorrichtung nach einem der Ansprüche 19 und 20, dadurch gekennzeichnet, daß über dem Mantel (1) eine Kammer (3) angeordnet ist, die oberhalb des höchsten Füllniveaus des Schachtes angebracht ist.

22. Vorrichtung nach Anspruch 21, dadurch gekennzeichnet, daß die Kammer (3) geeignet ist, den Wagen (15) und die Sonde (14) aufzunehmen und während der Zeit, in der die Vorrichtung nicht arbeitet, zur Lagerung der beiden dient.

23. Vorrichtung nach Anspruch 22, dadurch gekennzeichnet, daß der obere Endstellungsschalter (18) oberhalb des Niveaus der Kammer (3) angeordnet ist.

24. Vorrichtung nach einem der Ansprüche 21 bis 23, dadurch gekennzeichnet, daß die Kammer (3) einen Kalibrierbehälter (75) umfaßt, der sich in der Verlängerung des Durchganges (2) zwischen den U-förmigen Armen des Mantels (1) befindet, wobei dieser Kalibrierbehälter (75) geeignet ist, Medien mit bekannter Dichte zu enthalten, die der Kalibrierung der Sonde (14) dienen.

25. Vorrichtung nach einem der Ansprüche 21 bis 24, dadurch gekennzeichnet, daß sie ferner einen Lecksucher (78) aufweist, der in der Lage ist, in dem Mantel (1) das Vorhandensein von infolge eines Lecks dort eingedrungener fester oder flüssiger Materie festzustellen und eine entsprechende Information an die Steuerungsanordnung (C) zu übermitteln.

26. Vorrichtung nach Anspruch 25, dadurch gekennzeichnet, daß die Steuerungsanordnung (C) in der Lage ist, im Falle eines Lecks zu steuern, daß die Sonde (14) sofort in die Kammer (3) gesandt und die Funktion der Vorrichtung unterbrochen wird.

27. Vorrichtung nach einem der vorhergehenden Ansprüche, dadurch gekennzeichnet, daß die Steuerungsanordnung (C) ferner einen externen Speicher enthält.

**Claims**

1. Installation for continuous measurement of the density and of the total weight of dredging materials loaded into the well of a self-contained dredger, comprising at least one radioactive probe (14) housed in a waterproof duct (1) which is fixed substantially vertically in the well, the said probe (14) comprising a radioactive source (60) and a nuclear detector (61), the detectr (61) being equipped with means for converting nuclear radiation into analysable data, the said installation being characterised in that it comprises :

(i) one or more devices each comprising

- the duct (1), which has a substantially U-shaped cross-section, the two branches of the U forming a sort of semi-open vertical channel (2);
- the radioactive probe (14), which is of the transmissive type, the radioactive source (60) transmitting towards the nuclear detector (61), the radioactive source (60) and the nuclear detector (61) being placed facing each other, each in a branch of the U, the nuclear detector (61) being equipped with means for converting the nuclear radiation into photons, and then into electrical pulses, and for subsequently amplifying these pulses;
- guiding mechanisms (16, 53) serving to guide said probe (14) along a vertical path in the duct (1);
- mechanisms for causing said probe (14) to move upwards and downwards along this vertical path in the duct (1);
- means (54) for determining the position of the said probe (14) in the duct (1);

(ii) a computer-aided management set (c), this management set (C) being capable of measuring and recording time, of receiving and processing the data collected by the means (54) for determining the position of the probe or probes (14) in the duct or ducts (1), of receiving and processing the data collected by the nuclear detector or detectors (61) in the form of electrical pulses counted in the course of preset regular intervals and converted into corresponding measurements of density, of calculating from these measurements the total weight of dredging materials loaded into the well, of keeping all the data in a central memory, of displaying the analysis and the result of these measurements with the aid of a visual display unit and/or of a printer and, in accordance with a preselected program, of regulating and controlling the general functioning of the installation;

(iii) means for transmission to the management set (C) of the electrical pulses supplied by the nuclear detector or detectors (61) and by the means (54) for determining the position of the probe or probes (14) in the duct or ducts (1).

2. Installation according to Claim 1, characterised in that the duct (1) is manufactured in steel.

3. Installation according to either of the preceding claims, characterised in that the radioactive source (60) is a source of gamma rays.

4. Installation according to Claim 3, characterised in that the radioactive source (60) consists of a ceramic bead of double-encapsulated $^{137}$Cs.

5. Installation according to any one of the preceding claims, characterised in that the nuclear detector (61) consists of a scintillation counter.

6. Installation according to Claim 5, characterised in that the means for converting the nuclear radiation into photons consist of a crystal of NaI(Tl).

7. Installation according to Claim 6, characterised in that the means for converting the photons into electrical pulses and the means for amplifying the electrical pulses consist respectively of a photomultiplier and of an electronic unit for supply and for amplification.

8. Installation according to any one of the preceding claims, characterised in that the probe (14) is mounted on a trolley (15).

9. Installation according to Claim 8, characterised in that the mechanisms for guiding the probe (14) consist of metal rails (16) arranged vertically in the duct (1) and of rollers (53) mounted on the trolley (15).

10. Installation according to Claim 9, characterised in that the mechanisms for causing the probe (14) to move along a vertical path in the duct (1) comprise a jack (19) fitted with a piston rod (22) which can move vertically in the duct (1).

11. Installation according to Claim 10, characterised in that the mechanisms for causing the probe (14) to move along a vertical path in the duct (1) comprise a transmission mechanism adapted to transmit the movement of the piston rod (22) to the trolley (15), multiplying the amplitude of this movement.

12. Installation according to Claim 11, characterised in that the transmission mechanism comprises pulleys (26, 27, 28, 29) mounted on a spindle (25) securely attached to the end of the piston rod (22), fixed pulleys (30, 31, 32, 33) securely attached to the duct (1) and a metal cable (23) anchored to the trolley (15) and passing over the pulleys (26, 27, 28, 29, 30, 31, 32, 33).

13. Installation according to either of Claims 11 and 12, characterised in that the transmission mechanism is such that any movement of the piston rod (22) entails a movement of the probe (14) in the opposite direction.

14. Installation according to either of claims 12 and 13, characterised in that the means for determining the position of the probe (14) in the duct (1) comprise an angular position encoder (54) fitted with an optically encoded disc and with an internal optical and electronic device, the disc being coupled mechanically to one of the fixed pulleys (31) over which passes the metal cable (23).

15. Installation according to Claim 9 characterised in that the mechanisms for causing the probe (14) to move along the vertical path in the duct (1) comprise an electric motor provided with an electromechanical brake, a speed reducer and a winding drum for the cable.

16. Installation according to Claim 15 characterised in that it is provided with means for regulating the speed of movement of the probe (14), these means comprising an electronic frequency control.

17. Installation according to Claim 15 characterised in that it is provided with means for regulating the speed of movement of the probe (14), these means comprising a four-quadrant regulator and a tachogenerator mounted on the electric motor.

18. Installation according to any one of Claims 15, 16 and 17 characterised in that the means for determining the position of the probe (14) in the duct (1) comprise an angular position encoder fitted with an optically encoded disc and with an internal optical and electronic device, the disc being coupled mechanically to a rotary part whereof the movement correlates with the movement of the probe (14).

19. Installation according to any one of the preceding claims, characterised in that it further comprises, at the ends of the vertical path along which the probe (14) travels in the duct (1), lower (17) and upper (18) end-of-travel switches adapted to transmit data to the computer-aided management set (C).

20. Installation according to Claim 19, characterised in that the management set (C) is provided with a program enabling in particular the nuclear detector (61) which performs continuous measurements, to transmit them to the management set (C) when the probe (14) moves fron the lower end-of-travel switch (17) to the upper end-of-travel switch (18) along a vertical path in the duct (1) and returns to its initial position without performing measurements.

21. Installation according to either of Claims 19 and 20, characterised in that the duct (1) is surmounted by a chamber (3) arranged above the maximum filling level of the well.

22. Installation according to Claim 21, characterised in that the chamber (3) is adapted to receive the trolley (15) and the probe (14) and to serve for their storage during the time when the installation is not in operation.

23. Installation according to Claim 22 characterised in that the upper end-of-travel switch (18) is located above the level of the chamber (3).

24. Installation according to any one of Claims 21 to 23, characerised in that the chamber (3) comprises a calibration tank (75) located in the extension of the channel (2) existing between the branches of the U-shaped duct (1), this calibration tank (75) being adapted to contain media of known density serving for the calibration of the probe (14).

25. Installation according to any one of Claims 21 to 24, characterised in that it further comprises a leak detector (78) capable of detecting the presence in the duct (1) of solid or liquid materials entering it as a result of a leak and of transmitting corresponding information to the management set (C).

26. Installation according to Claim 25, characterised in that the management set (C) is capable of commanding, in the case of a leak, the immediate sending of the probe (14) into the chamber (3) and the interruption of the operation of the installation.

27. Installation according to any one of the preceding claims, characterised in that the management set (C) further comprises an external memory.

*Fig.1.*

*Fig.2.*

*Fig.14.*

EP 0 456 629 B1

*Fig. 5.*   *Fig. 4.*   *Fig. 3.*

18

Fig.6.

Fig.7A.

Fig.7B.

Fig. 10.

Fig. 8.

Fig. 9.

*Fig.11.*

*Fig.12.*

*Fig.13A.*

*Fig.13B.*

Fig.15.

380 VAC

24 VDC

I/O INTERFACE

I/O

INTERFACE

COMPUTER

A

B

C

EP 0 456 629 B1